# EUROPÄISCHE PATENTSCHRIFT

(11) **EP 1 502 493 B1**
(45) Veröffentlichungstag und Bekanntmachung des Hinweises auf die Patenterteilung: **13.08.2014**
(21) Anmeldenummer: 04017571.3
(22) Anmeldetag: 24.07.2004
(51) Int. Cl.: A01F 15/07

(54) **Vorrichtung zum Umhüllen oder Verpacken von insbesondere landwirtschaftlichen Erntegutballen**
Device for wrapping or packing, in particular for agricultural bales
Dispositif pour envelopper ou emballer, particulièrement pour des balles agricoles

(30) Priorität: 30.07.2003 DE 10334681
(43) Veröffentlichungstag der Anmeldung: 02.02.2005
(73) Patentinhaber: Maschinenfabrik Bernard Krone GmbH, 48480 Spelle (DE)
(72) Erfinder: Krone, Bernard, Dr.-Ing E.h., 48480 Spelle (DE); Martensen, Klaus, Dr.-Ing., 48477 Hörstel (DE); van Bassen, Aloys, 49832 Freren (DE); Schulz, Stephan, Dipl.-Ing., 48369 Saerbeck (DE)

(56) Entgegenhaltungen:
- EP-A- 1 210 861
- DE-C- 4 308 557
- US-A- 5 727 359
- US-A- 5 870 883
- US-A1- 2003 070 392

## Beschreibung

Die Erfindung bezieht sich auf eine Vorrichtung zum Umhüllen oder Verpacken von Erntegutballen mit einer Wickeleinheit und einer dieser zugeordneten Wickeltischeinrichtung.

Bekannt sind aus dem Stand der Technik Vorrichtungen zum Umhüllen oder Verpacken von landwirtschaftlichem Erntegutballen mit einer Wickeleinheit und einer dieser zugeordneten Wickeltischeinrichtung, bei der der zu umhüllende Erntegutballen, beispielsweise ein Rundballen, mit Hilfe einer Wickeleinheit mit einem Wickelmaterial umhüllt wird. Je nach Größe des zu umwickelnden Erntegutballens ist es hierbei notwendig, das Wickelmaterial, beispielsweise eine Folienbahn, so auszurichten, dass es mittig entlang des Ernteguts geführt werden kann. Ansonsten ergibt sich eine ungleichmäßige oder schnell verrutschende Wicklung des Ernteguts. Um das Wickelmaterial zentral auf die Höhe der Mitte des Erntegutballens zu positionieren, bzw. um unterschiedlich breite Folienbahnen (Folienrollen) an die Größe des Erntegutballens anzupassen, weist die Wickeleinheit Möglichkeiten zum Arretieren des Wickelmaterials in vertikal unterschiedlichen Positionen auf. Dieses ist von Hand zu bewerkstelligen und aufgrund des häufig großen Gewichtes des Wickelmaterials schwer durchzuführen. Ein Steuermittel zum maschinellen, vertikalen Positionieren der Wickelmaterial aufweisenden Wickeleinheit ist schwer zu realisieren, da diese um eine zentrale Achse der Vorrichtung rotiert und eine Kraftübertragung auf die Wickeleinheit somit schwierig ist.

Eine EP 1 210 861 A2 offenbart eine Vorrichtung zum Pressen und Umwickeln von Rundballen, wobei einer Rundballenpresse ein Gerät zur Aufnahme des aus der Rundballenpresse ausgeworfenen Rundballens und zum anschließenden Umwickeln des Rundballens mit einer Folie nachgeordnet ist. Dieses Gerät zum Umwickeln der Rundballen wird dabei von einem Wickeltisch gebildet, der mittels Hubrollen in Führungsschienen beweglich geführt ist. Zur Aufnahme eines Rundballen nach dem Pressvorgang kann der Wickeltisch aus einer erhöhten, relativ weit hinter der Rundballenpresse befindlichen Wickelstellung in eine abgesenkte, an die Rundballenpresse angenäherte Stellung überführt werden. Diese Höhenveränderbarkeit erfüllt jedoch den Zweck, den Wickeltisch aus seiner Wickelstellung in eine Stellung zu verbringen, in der der aus der Rundballenpresse auszuwerfende Rundballen direkt auf den Wickeltisch abgelegt werden kann. In der Wickelstellung des Wickeltisches hingegen ist keine Veränderung der Höhe des Wickeltisches in Bezug zu den das Wickelmaterial tragenden Wickelarmen möglich.

Der Erfindung liegt die Aufgabe zugrunde, die soeben beschriebenen Nachteile zu vermeiden und insbesondere eine Vorrichtung zum Verpacken von Erntegutballen zu schaffen, die flexibel an die Größe des zu verpackenden Erntegutballens anpassbar ist.

Gelöst wird diese Aufgabe durch eine Vorrichtung gemäß Anspruch 1. Eine die oben beschriebene Aufgabe lösende Vorrichtung gemäß der Erfindung weist eine Wickeltischeinrichtung mit einer Wickeleinheit, einem Wickeltisch und einem zugehörigen Rahmen auf und zeichnet sich dadurch aus, dass der Wickeltisch höhenverstellbar ist. Durch die Höhenverstellbarkeit des Wickeltisches ist es möglich, statt der Änderung der Vertikalposition des Wickelmaterials, den zu umwickelnden Erntegutballen selbst in eine Position anzuheben oder abzusenken, in der das Wickelmaterial zentral um den Erntegutballen herumgeführt werden kann. Diese zentrale Position ist vorzugsweise dadurch gegeben, dass die Mitte einer beispielsweise Folienbahn zum Umwickeln des Erntegutballens in etwa in Höhe der Mitte des zu umwickelnden Erntegutballens befindlich ist. Somit werden auf vorteilhafte Weise die Probleme der im Stand der Technik beschriebenen Vorrichtung vermieden.

Bei einer weiteren Ausführungsform gemäß der Erfindung ist der Wickeltisch in sich höhenverstellbar. Diese Verstellung kann beispielsweise durch innerhalb des Wickeltisches befindliche Stellmittel durchgeführt werden. Von Vorteil ist hierbei, dass nur genau die Teile angehoben werden, die in Kontakt mit dem Erntegutballen stehen, und die gesamte Vorrichtung somit weniger Platz benötigt.

Da es sich bei den Erntegutballen nicht nur um vorzugsweise Rundballen, sondern auch um quaderförmige Ballen handelt, ist gemäß einem weiteren vorteilhaften Aspekt der Erfindung der Wickeltisch um eine quer zu der vertikalen Mittelachse der Vorrichtung stehende Achse schwenkbar. Die hiermit einhergehenden Vorteile liegen zum einen darin, dass auf diese Art und Weise der auf dem Wickeltisch befindliche Erntegutballen in eine zentrale Position bezüglich der Wickeleinheit gebracht werden kann und zum anderen die Ablage des umwickelten Erntegutballens auf beispielsweise einen nachgeordneten Aufnehmer oder auf den Untergrund je nach Größe des Ernteguts vereinfacht wird.

So ist der Wickeltisch bei relativ kleinen Erntegutballen in eine gegenüber großen Erntegutballen erhöhte Stellung zu bringen, um eine mittige Umwicklung mit Wickelmaterial zu ermöglichen. Damit der aus der nun höheren Position abzulegende Erntegutballen nicht beschädigt wird, kann der Wickeltisch vor dem Ablegen des Erntegutballens von der Vorrichtung in eine relativ niedrigere Position gebracht werden.

Vorteilhafterweise ist die Vorrichtung mit einer Steuereinrichtung versehen, die den Wickeltisch mit Hilfe zumindest einer zwischen Wickeltisch und Rahmen angeordneten Steuereinheit automatisch in eine vorgebbare Höhenstellung überführt, in der der Wickeltisch dann arretiert werden kann. Diese Arretierung kann bei einer beispielsweise einen doppelt wirkenden Zylinder aufweisenden Steuereinheit durch ein einfaches Verschließen der Ventile des Zylinders bewirkt werden, es sind aber auch zusätzliche Sicherungsmittel denkbar.

Das Bedienpersonal kann bei der mit einer Steuereinrichtung versehenen Vorrichtung in einfacher Weise, beispielsweise die Breite des Wickelmaterials und/oder die vertikale Abmessung des auf dem Wickeltisch befindlichen Erntegutballens und/oder dessen Form vorgeben und der Wickeltisch wird automatisch in die zum Umhüllen oder Verpacken des Erntegutballens optimale Position überführt.

Um eine größtmögliche Flexibilität der Vorrichtung zu gewährleisten, kann der Wickeltisch auch stufenlos in verschiedene Höhenstellungen überführt werden.

Bei einer weiteren Ausführungsform der Erfindung weist die Vorrichtung Mittel zur Gewichtsmessung des auf dem Wickeltisch befindlichen Erntegutballens auf. Dieses zumindest eine Mittel kann beispielsweise ein an einer Lagerstelle des Wickeltisches oder des Rahmens vorgesehener als Dehnungsmessstreifen ausgebildeter Verformungsaufnehmer sein. Somit ist dem Bedienpersonal die Möglichkeit gegeben, die verarbeitete Menge von Erntegut zu bestimmen, was dem Komfort einer solch erfindungsgemäßen Einrichtung erhöht.

Weitere vorteilhafte Ausgestaltungen der Erfindung ergeben sich aus den Unteransprüchen und den schematischen Darstellungen in den Zeichnungen. Es zeigt:
- Fig. 1:: ein Ausführungsbeispiel einer Vorrichtung gemäß der Erfindung, in diesem Fall eine Presswickelkombination
- Fig. 2:: einen Ausschnitt der Vorrichtung nach Fig. 1 mit der Wickeltischeinrichtung und einem Teil der Wickeleinheit in einer ersten Höhe,
- Fig. 3:: eine Abbildung nach Fig. 2 mit einem höhenverstellten Wickeltisch in einer zweiten Höhe.

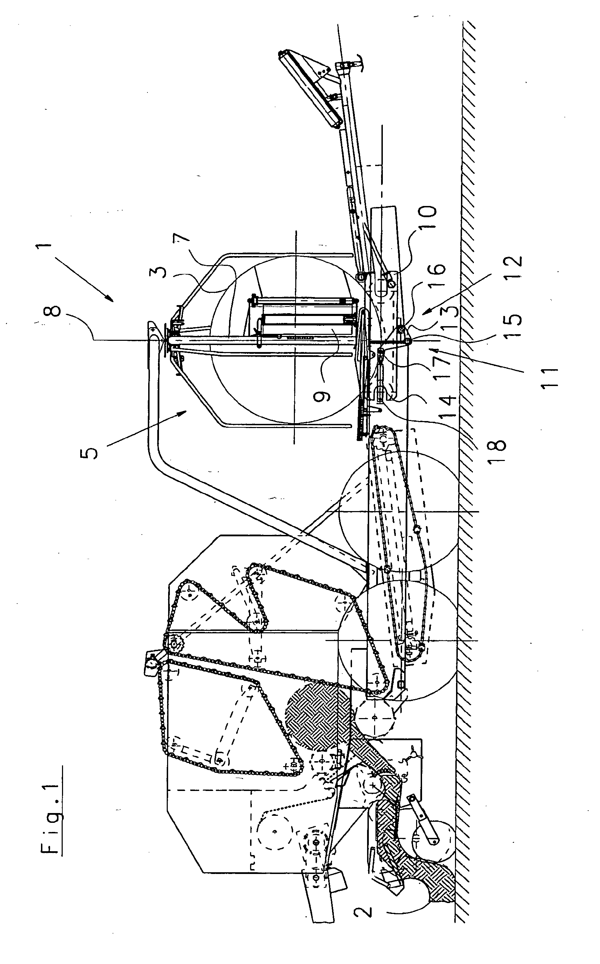

Eine erfindungsgemäße Vorrichtung 1 ist in Fig. 1 als Presswickelkombination ausgebildet. Bei dieser wir das Erntegut 2 zu einem Erntegutballen 3 gepresst und auf die Wickeltischeinrichtung 4 überführt. Die Wickeleinheit 5 weist einen drehbaren Rahmen 7 auf, der um eine Rotationsachse bewegt wird, die in diesem Fall der vertikalen Achse 8 der Vorrichtung 1 entspricht. An dem Rahmen 7 ist das Wickelmaterial 9 angebracht, welches in diesem Fall eine Rolle mit einer Folienbahn ist. Das Wickelmaterial 9 ist drehbar an dem Rahmen 7 angebracht, so dass es sich bei der Rotation des Rahmens 7 um den Erntegutballen 3 abwickeln kann. Der zur Wickeltischeinrichtung 4 gehörende Rahmen 10 wird in diesem Fall von dem Rahmen der Presswickelkombination schwenkbeweglich abgestützt. Der Erntegutballen 3 liegt auf dem Wickeltisch 11 auf, der über eine Steuereinheit 12 mit dem Rahmen verbunden ist. Die Steuereinheit 12 weist hierbei eine Steuerplatte 13 und einen Stellzylinder 14 auf, wobei die Steuerplatte 13 Achsen 15, 16 aufnimmt.

Während die Achse 15 die Steuerplatte 13 mit dem Rahmen der Presswickelkombination verbindet, ist der Wickeltisch 11 über die Achse 16 mit der Steuerplatte 13 verbunden. Ebenfalls über ein Gelenk 17 ist der Stellzylinder 14 mit der Steuerplatte 13 verbunden, wobei an dem anderen Ende des Stellzylinders 14 ein weiteres Gelenk 18 diesen mit dem Rahmen der Presswickelkombination verbindet. Es versteht sich, dass der Stellzylinder 14 wie auch die gesamte Steuereinheit 12 durch andere Stellmittel ersetzt werden können. So ist denkbar, dass beispielsweise der Stellzylinder 14 auch durch einen Schrittmotor oder dgl. ausgetauscht werden kann. Auch sind an den Enden des Wickeltisches 11 mit dem Rahmen der Presswickelkombination verbundene Hubzylinder denkbar, die teleskopartig ein- und ausfahren können und somit für eine Höhenverstellbarkeit des Wickeltisches 11 sorgen können. Von Vorteil bei diesem Ausführungsbeispiel der Erfindung ist es, dass die Kraftübertragung zur Vertikalverstellung des Wickeltisches 11 auf wenige Stellmittel verteilt wird.

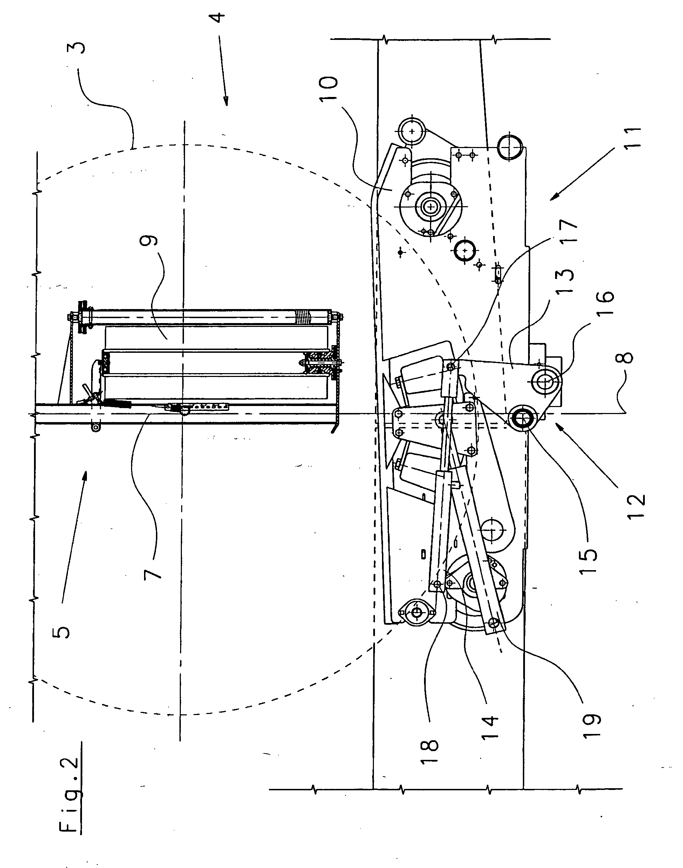

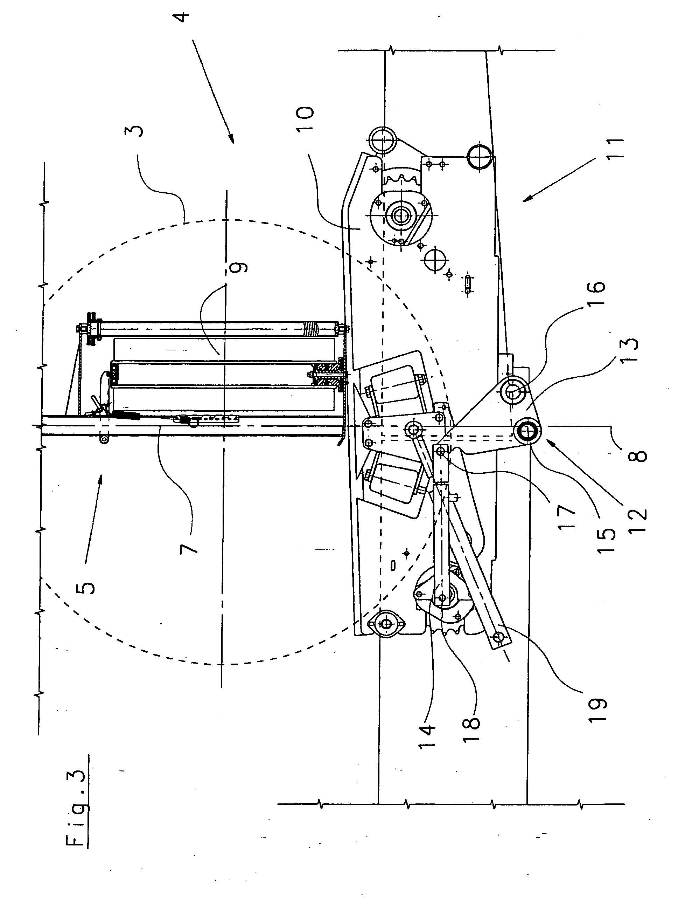

Während bei dem in Fig. 2 dargestellten, relativ großen Erntegutballen 3 der Stellzylinder 14 ausgefahren ist, und somit die Achse 16 zwischen Wickeltisch 11 und Steuerplatte 13 sich zumindest teilweise unterhalb der Achse 15 befindet (Fig. 2), ist der Stellzylinder 14 bei dem in Fig. 3 dargestellten, relativ kleinen Erntegutballen 3 in eingezogener Position. Die Achse 16 ist nun in Fig. 3 zumindest teilweise oberhalb der Achse 15, womit der Wickeltisch 11 relativ zu seiner in Fig. 2 dargestellten Lage angehoben ist. Damit ist der in Fig. 3 kleinere Erntegutballen 3 wieder in etwa zentral von dem Wickelmaterial 9 zu umwickeln.

Ein weiteres als Stellzylinder 19 ausgeführtes Stellmittel ist zwischen Rahmen der Presswickelkombination und Wickeltisch 11 angebracht. Dadurch kann beispielsweise die Vertikalbewegung des Wickeltisches 11 stabilisiert werden oder aber auch durch eine Veränderung der Hublängen der beiden Stellzylinder 14 und 19 eine Neigung des Wickeltisches 11 um eine senkrecht auf der Figurenebene und quer zur Achse 8 stehende Achse bewirkt werden. Diese in den Figuren nicht näher bezeichnete Achse liegt parallel zu den Achsen 15 und 16.

## Patentansprüche

1. Vorrichtung zum Umhüllen oder Verpacken von insbesondere landwirtschaftlichem Erntegutballen (3) mit einer, Wickelmaterial (9) zur Abgabe an den Erntegutballen (3) umfassenden Wickeleinheit (5) und einer dieser zugeordneten, einen Wickeltisch (11) und einen Rahmen (10) aufweisenden Wickeltischeinrichtung (4) zur Aufnahme und zum Umhüllen oder Verpacken des Erntegutballens (3), wobei der Wickeltisch (11) höhenverstellbar ist, **dadurch gekennzeichnet, dass** durch die Höhenverstellbarkeit des Wickeltisches (11) der zu umwickelnde Erntegutballen (3) in eine zentrale Position anheb- oder absenkbar ist, welche dadurch gegeben ist, dass die Mitte des Wickelmaterials (9) sich in etwa in Höhe der Mitte des zu umwickelnden Erntegutballens (3) befindet.

2. Vorrichtung (1) nach Anspruch 1, **dadurch gekennzeichnet, dass** der Wickeltisch (11) in sich höhenverstellbar ist.

3. Vorrichtung (1) nach einem der Ansprüche 1 oder 2, **dadurch gekennzeichnet, dass** der Wickeltisch (11) um zumindest eine in etwa quer zu einer vertikalen Achse (8) der Vorrichtung (1) stehenden Achse schwenkbar ist.

4. Vorrichtung (1) nach einem der Ansprüche 1 bis 3, **dadurch gekennzeichnet, dass** der Wickeltisch (11) in zumindest eine in etwa quer zu der vertikalen Achse (8) der Vorrichtung (1) stehende Richtung bewegbar ist.

5. Vorrichtung (1) nach einem der Ansprüche 1 bis 4, **dadurch gekennzeichnet, dass** der Wickeltisch (11) durch zumindest eine den Wickeltisch (11) und einen Rahmen der Vorrichtung (1) verbindende Steuereinheit (12) höhenverstellbar ist.

6. Vorrichtung (1) nach einem der Ansprüche 1 bis 5, **dadurch gekennzeichnet, dass** der Wickeltisch (11) in vorgebbaren Höhenstellungen arretierbar ist.

7. Vorrichtung (1) nach Anspruch 5, **dadurch gekennzeichnet, dass** der Wickeltisch (11) durch die Steuereinheit (12) in vorgebbare Höhenstellungen überführbar und dort arretierbar ist.

8. Vorrichtung (1) nach Anspruch 7, **dadurch gekennzeichnet, dass** der Wickeltisch (11) durch eine Steuereinrichtung automatisch in vorgebbare Höhenstellungen überführbar ist.

9. Vorrichtung (1) nach einem der Ansprüche 1 bis 8, **dadurch gekennzeichnet, dass** der Wickeltisch (11) stufenlos höhenverstellbar ist.

10. Vorrichtung (1) nach Anspruch 8, **dadurch gekennzeichnet, dass** der Wickeltisch (11) durch die Steuereinrichtung in Abhängigkeit der Breite eines Wickelmaterials (9) höhenverstellbar ist.

11. Vorrichtung (1) nach Anspruch 8, **dadurch gekennzeichnet, dass** der Wickeltisch (11) durch die Steuereinrichtung in Abhängigkeit der vertikalen Abmessung des auf dem Wickeltisch (11) befindlichen Erntegutballens (3) höhenverstellbar ist.

12. Vorrichtung (1) nach einem der Ansprüche 1 bis 11, **dadurch gekennzeichnet, dass** die Vorrichtung (1) zumindest ein Mittel zur Gewichtsmessung des auf dem Wickeltisch (11) befindlichen Erntegutballens (3) aufweist.

13. Vorrichtung (1) nach Anspruch 12, **dadurch gekennzeichnet, dass** das Mittel zur Gewichtsmessung ein Kraft- oder Verformungsaufnehmer ist.

14. Vorrichtung (1) nach einem der Ansprüche 12 oder 13, **dadurch gekennzeichnet, dass** ein als Dehnungsmessstreifen ausgebildeter Verformungsaufnehmer an zumindest einer Lagerstelle des Wickeltisches (11) vorgesehen ist.

15. Vorrichtung (1) nach einem der Ansprüche 12 bis 14, **dadurch gekennzeichnet, dass** ein als Dehnungsmessstreifen ausgebildeter Verformungsaufnehmer an einer Lagerstelle des Rahmens der Vorrichtung (1) vorgesehen ist.

## Claims

1. Device for wrapping up or packaging a bale (3) of in particular agricultural crops, comprising a wrapping unit (5), which comprises wrapping material (9) to be delivered to the bale (3) of agricultural crops, and a wrapping table apparatus (4) which is assigned to said wrapping unit, has a wrapping table (11) and a frame (10) and is intended to receive and wrap up or package the bale (3) of agricultural crops, the wrapping table (11) being adjustable in height, **characterised in that** the bale (3) of agricultural crops to be wrapped can be raised or lowered into a central position owing to the height-adjustability of the wrapping table (11), which central position is produced by the centre of the wrapping material (9) being located at substantially the same height as the centre of the bale (3) of agricultural crops to be wrapped.

2. Device (1) according to claim 1, **characterised in that** the wrapping table (11) is adjustable in height within itself.

3. Device (1) according to either claim 1 or claim 2, **characterised in that** the wrapping table (11) is pivotable about at least one axis that is approximately transverse to a vertical axis (8) of the device (1).

4. Device (1) according to any of claims 1 to 3, **characterised in that** the wrapping table (11) is movable in at least one direction that is approximately transverse to the vertical axis (8) of the device (1).

5. Device (1) according to any of claims 1 to 4, **characterised in that** the wrapping table (11) can be adjusted in height by at least one control unit (12) which connects the wrapping table (11) and a frame of the device (1).

6. Device (1) according to any of claims 1 to 5, **characterised in that** the wrapping table (11) can be locked in predeterminable height positions.

7. Device (1) according to claim 5, **characterised in that** the wrapping table (11) can be moved into predeterminable height positions and locked in said positions by the control unit (12).

8. Device (1) according to claim 7, **characterised in that** the wrapping table (11) can be automatically moved into predeterminable height positions by a control apparatus.

9. Device (1) according to any of claims 1 to 8, **characterised in that** the wrapping table (11) can be continuously adjusted in height.

10. Device (1) according to any of claims 1 to 8, **characterised in that** the wrapping table (11) can be adjusted in height by the control apparatus according to the width of a wrapping material (9).

11. Device (1) according to claim 8, **characterised in that** the wrapping table (11) can be adjusted in height by the control apparatus according to the vertical dimension of the bale (3) of agricultural crops located on the wrapping table (11).

12. Device (1) according to any of claims 1 to 11, **characterised in that** the device (1) has at least one means for weighing the bale (3) of agricultural crops located on the wrapping table (11).

13. Device (1) according to claim 12, **characterised in that** the weighing means is a force or deformation transducer.

14. Device (1) according to either claim 12 or claim 13, **characterised in that** a deformation transducer formed as a strain gauge is provided at at least one bearing point of the wrapping table (11).

15. Device (1) according to any of claims 12 to 14, **characterised in that** a deformation transducer formed as a strain gauge is provided at a bearing point of the frame of the device (1).

## Revendications

1. Dispositif permettant d'envelopper ou d'emballer en particulier des balles agricoles (3) comportant une unité d'enroulement (5) comprenant un matériau d'enroulement (9) pour permettre de le fournir à la balle agricole (3), et un dispositif à table d'enroulement associé à celle-ci comprenant une table d'enroulement (11) et un châssis (4) pour permettre la réception et l'enveloppement ou l'emballage de la balle agricole (3), cette table d'enroulement (11) étant réglable en hauteur,
**caractérisé en ce que**
suite à la possibilité de réglage en hauteur de la table d'enroulement (11) la balle agricole (3) à enrouler peut être levée ou abaissée dans une position centrale qui est réalisée de sorte que la partie médiane du matériau d'enroulement (9) se trouve essentiellement à la hauteur du milieu de la balle agricole (3) à enrouler.

2. Dispositif conforme à la revendication 1,
**caractérisé en ce que**
la table d'enroulement (11) est réglable en hauteur par elle-même.

3. Dispositif (1) conforme à l'une des revendications 1 ou 2,
**caractérisé en ce que**
La table d'enroulement (11) peut pivoter autour d'au moins un axe situé essentiellement transversalement à l'axe vertical (8) du dispositif (1).

4. Dispositif (1) conforme à l'une des revendications 1 à 3,
**caractérisé en ce que**
la table d'enroulement (11) peut être déplacée dans au moins une direction située essentiellement transversalement à l'axe vertical (8) du dispositif (1).

5. Dispositif (1) conforme à l'une des revendications 1 à 4,
**caractérisé en ce que**
la table d'enroulement (11) peut être réglée en hauteur par au moins une unité de commande (12) reliant la table d'enroulement (11) et un châssis du dispositif (1).

6. Dispositif (1) conforme à l'une des revendications 1 à 5,
**caractérisé en ce que**
la table d'enroulement (11) peut être bloquée dans des positions en hauteur prédéfinies.

7. Dispositif (1) conforme à la revendication 5,
**caractérisé en ce que**
la table d'enroulement (11) peut être transférée par l'unité de commande (12) dans des positions en hauteur prédéfinies et y être bloquée.

8. Dispositif (1) conforme à la revendication 7,
**caractérisé en ce que**
la table d'enroulement (11) peut être automatiquement transférée par un dispositif de commande dans des positions en hauteur prédéfinies.

9. Dispositif (1) conforme à l'une des revendications 1 à 8,
**caractérisé en ce que**
la table d'enroulement (11) est réglable en hauteur de façon continue.

10. Dispositif (1) conforme à la revendication 8,
**caractérisé en ce que**
la table d'enroulement (11) peut être réglée en hauteur par le dispositif de commande en fonction de la largeur du matériau d'enroulement (9).

11. Dispositif (1) conforme à la revendication 8,
**caractérisé en ce que**
la table d'enroulement (11) peut être réglée en hauteur par le dispositif de commande en fonction de la dimension verticale de la balle agricole (3) située sur la table d'enroulement (11).

12. Dispositif (1) conforme à l'une des revendications 1 à 11,
**caractérisé en ce que**
le dispositif (1) comporte au moins un moyen de mesure du poids de la balle agricole (3) située sur la table d'enroulement (11).

13. Dispositif (1) conforme à la revendication 12,
**caractérisé en ce que**
le moyen de mesure de poids est un capteur de force ou de déformation.

14. Dispositif (1) conforme à l'une des revendications 12 et 13,
**caractérisé en ce qu'**
il est prévu un capteur de déformation réalisé sous la forme de bandes de mesure d'allongement en au moins un point d'appui de la table d'enroulement (11).

15. Dispositif (1) conforme à l'une des revendications 12 à 14,
**caractérisé en ce qu'**
il est prévu un capteur de déformation réalisée sous la forme de bandes de mesure d'allongement en un point d'appui du châssis du dispositif (1).
